## Europäisches Patentamt

## European Patent Office

## Office européen des brevets

(19)

(11) Numéro de publication: **0 200 612 B1**

(12) **FASCICULE DE BREVET EUROPEEN**

(45) Date de publication du fascicule du brevet:
**19.07.89**

(51) Int. Cl.⁴: **B60K 37/00, B60K 37/06**

(21) Numéro de dépôt: **86400746.3**

(22) Date de dépôt: **08.04.86**

(54) **Dispositif de regroupement constituant un clavier de contacteurs de commande d'équipements installés dans un véhicule automobile.**

(30) Priorité: **10.04.85 FR 8505391**

(43) Date de publication de la demande:
**10.12.86 Bulletin 86/45**

(45) Mention de la délivrance du brevet:
**19.07.89 Bulletin 89/29**

(84) Etats contractants désignés:
**AT BE DE FR GB IT NL SE**

(56) Documents cités:
**EP-A- 0 083 701**
**DE-A- 2 805 583**
**FR-A- 2 020 777**
**FR-A- 2 315 408**
**FR-A- 2 428 315**
**FR-A- 2 481 657**
**US-A- 4 473 724**

(73) Titulaire: **Citroen, Maxime H., 19 Villa Madrid, F-92200 Neuilly sur Seine(FR)**

(72) Inventeur: **Citroen, Maxime H., 19 Villa Madrid, F-92200 Neuilly sur Seine(FR)**

(74) Mandataire: **Cianet, Denis et al, Cabinet Beau de Loménie 55, rue d'Amsterdam, F-75008 Paris(FR)**

ACTORUM AG

## Description

La présente invention concerne un dispositif de regroupement constituant un clavier de contacteurs de commande d'équipements installés dans un véhicule automobile.

Dans les véhicules automobiles, les contacteurs de commande des divers équipements sont montés sur le tableau de bord, ou au voisinage du volant sur un ou plusieurs supports et disposés à une distance plus ou moins accessible du conducteur occupant sa position de conduite.

On constate cependant que les constructeurs de véhicules automobiles ne se sont pas accordés sur une standardisation de l'emplacement des divers contacteurs, destinée à éviter que les conducteurs soient déroutés chaque fois qu'ils changent de véhicule.

Ainsi, lorsqu'un conducteur utilise un nouveau véhicule, ou encore lorsqu'un jeune conducteur aborde un véhicule pour la première fois, il doit examiner attentivement tous les contacteurs pour déterminer quels équipements ils commandent, en s'aidant des graphismes apposés sur les contacteurs, ou encore en consultant la notice du véhicule.

Force est de constater que de nombreux conducteurs ne respectent pas cette précaution essentielle et, quand bien même l'ont-ils respectée, ils doivent faire face à une période d'apprentissage plus ou moins longue, durant laquelle en cas d'urgence surgissent souvent des hésitations et/ou des réflexes inopportuns.

On remarque dans le document FR-A 2 428 315 une tentative intéressante sous la forme d'un dispositif de regroupement formant clavier de contacteurs de commande d'équipements installés dans un véhicule, comprenant un support consistant en une reproduction à échelle réduite d'un véhicule et des contacteurs fixés sur le support à des emplacements correspondant sensiblement à ceux que les équipements qu'ils commandent occupent dans le véhicule.

On remarque cependant qu'il s'agit d'un support plan et l'inconvénient de cette solution est l'obligation de s'aider de la vue pour reconnaître le schéma apposé sur le support, puis guider la main jusqu'au contacteur désiré. Ceci est incompatible avec l'exigence de sécurité selon laquelle le conducteur ne doit pas quitter la route des yeux, tout particulièrement lorsqu'il s'agit de commander des équipements essentiels pour la conduite et/ou pour l'information des autres usagers. Cet appareil connu ne peut donc s'appliquer qu'à des contacteurs commandant des équipements utilisés lorsque le véhicule est à l'arrêt à l'exclusion de ceux utilisé en marche tels que feux de direction, feux de croisement, essuie-glace, etc.

Dans le but de pallier ces inconvénients, la présente invention propose un dispositif du type mentionné ci-avant, caractérisé en ce que ledit support consiste au moins partiellement en une reproduction, ou une quasi-reproduction, en relief et à l'échelle réduite d'un véhicule, et que chaque contacteur y est fixé à un emplacement correspondant sensiblement à celui que l'équipement qu'il commande occupe dans le véhicule.

Grâce à cette disposition, les conducteurs auront à leur disposition un dispositif sur lequel les commandes seront regroupées à des emplacements conformes à la logique élémentaire et qu'ils pourront retrouver avec un apprentissage réduit à l'extrême et sans avoir à s'aider du regard, grâce à la reconnaissance tactile immédiate des reliefs du clavier sur lequel sont agencés les contacteurs.

Les détails et autres avantages de l'invention seront mieux compris à la lecture de la description qui va suivre, en se référant aux dessins annexés, dans lesquels:

– la figure 1 est une vue en perspective d'un dispositif selon la présente invention;

– la figure 2 est une vue schématique d'un poste de conduite d'un véhicure automobile, incorporant un dispositif selon l'invention;

– la figure 3 illustre une variante selon laquelle on utilise deux dispositifs partiels concernant la partie avant et la partie arrière du véhicule respectivement;

- la figure 4 illustre un schéma de raccordement classique avec faisceau de distribution aux équipements,

- les figures 5 et 6 illustrent des schémas de raccordement pour installation de distribution et de commande en multiplexage, et

- la figure 7 illustre une variante selon laquelle le dispositif est implanté au centre du volant.

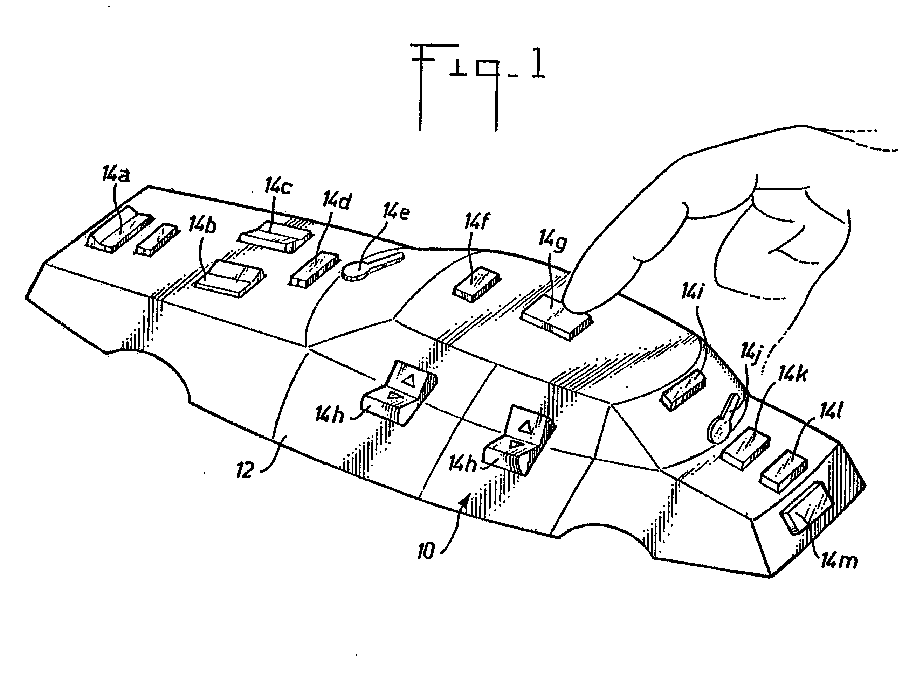

Le dispositif selon l'invention, également dénommé ici clavier, représenté en perspective à la figure 1 et désigné dans son ensemble par la référence 10 comprend un support 12 qui, comme on le remarque par comparaison de taille avec les doigts de la main d'un opérateur illustrés à la même figure, est une reproduction en relief et à échelle réduite d'un véhicule automobile.

Sur ce support sont fixés un certain nombre de contacteurs 14 destinés à la commande des équipements installés dans un véhicule automobile réel à l'intérieur duquel est monté le clavier objet de la présente invention.

Plus précisément, chaque contacteur est fixé sur le support 12 à un emplacement correspondant sensiblement à celui de l'équipement qu'il commande occupe dans le véhicule réel. Ainsi, un contacteur 14a est fixé à la partie avant du capot du support et commande l'allumage des feux avant du véhicule. Bien entendu, ces feux se décomposant dans la réalité en trois types de feux différents au moins, à savoir : feux de positions, feux de croisement et feux de route, ce contacteur pourra consister en un contacteur multiple ou en un groupe de contacteurs équivalent.

A la partie arrière du capot avant et de part et d'autre de l'axe longitudinal médian du support sont fixés des contacteurs couplé 14b et 14c de commande des feux de direction.

En variante, ces contacteurs pourront consister en un contacteur unique à bascule ou à levier placé à cheval sur l'axe longitudinal du support.

Au voisinage de la bordure inférieure du pare-brise, un contacteur-poussoir 14d est destiné à la commande du lave-glace.

Sur le pare-brise lui-même, un contacteur 14e est destiné à la commande de l'essuie-glace du pare-brise. Avantageusement, ce contacteur forme également une reproduction à échelle réduite d'un balai d'essuie-glace et peut prendre plusieurs positions de commande par rotation autour d'un pivot d'extrémité. Pour chaque position, le contacteur détermine le fonctionnement de l'essuie-glace suivant les divers modes envisagés (arrêt, balayage intermittent, balayage lent, balayage rapide).

Sur le toit, un contacteur 14f est destiné à la commande de l'avertisseur, ainsi qu'un contacteur 14g commandant l'éclairage intérieur.

Sur chacune des portières sont fixés des contacteurs 14h de commande des lève-vitres. Ces contacteurs pourront être d'un type courant à position stable médiane de repos et deux positions non stables d'actionnement de part et d'autre de la position médiane, ou d'un type à curseur permettant d'assigner aux vitres toute position prédéterminée entre une position fermée et une position ouverte.

Sur la vitre arrière sont fixés d'une part un contacteur 14i de commande de désembuage/dégivrage et d'autre part des contacteurs 14j et 14k pour la commande l'essuie-glace et du lave-glace de la vitre arrière.

Enfin, à l'extrémité arrière du coffre sont fixés un contacteur 14l pour les feux de détresse et un contacteur 14m pour le feu arrière de signalisation additionnel dit "feu de brouillard".

Bien entendu, l'énumération qui précède n'est nullement exhaustive et le nombre des contacteurs sera adapté en fonction des équipements du véhicule réel.

Dans ce qui précède, on comprendra que l'expression "reproduction" destinée à caractériser la configuration du support, n'est pas limitée à une simple reproduction homothétique du véhicule réel.

En particulier, il pourra s'agir d'un bas relief, dans lequel la réduction d'échelle de certaines cotes, par exemple des cotes verticales du véhicule sera accentuée par rapport à la réduction d'échelle des cotes horizontales. bien entendu, les reliefs doivent être suffisants pour permettre leur reconnaissance tactile. Par ailleurs, on pourra effectuer une certaine déformation des formes du véhicule, comme par exemple incliner les surfaces verticales et exagérer ou diminuer l'inclinaison de certaines surfaces, ou encore modifier les proportions respectives des différentes parties.

C'est dans ce sens qu'il convient de comprendre l'expression "quasi-reproduction" utilisée en introduction du présent mémoire et dans les revendications.

Par ailleurs, cette reproduction ou quasi-reproduction peut avoir un caractère spécifique au véhicule réel considéré et s'inspirer des formes et proportions du modèle ; ou encore avoir un caractère générique pour tous modèles confondus de véhicules d'une famille, et présenter les formes et proportions d'"un véhicule" choisi comme archétype de la famille (automobile 2 volumes, automobile 3 volumes, break, camionette, autobus, camion, etc..).

L'invention ne se limite pas aux seuls véhicules terrestres et pourra également s'appliquer aussi bien aux aéronefs et aux bateaux.

De plus, l'emplacement de chaque contacteur n'est pas nécessairement un report exact de l'emplacement de chaque équipement commandé. Ainsi, le contacteur de commande des deux phares peut parfaitement consister en un contacteur unique pourvu qu'il soit situé à l'avant du capot. Pour les feux de direction, on placera les contacteurs à des emplacements répondant la logique de la fonction correspondante : signaler sur le côté droit (gauche) les changement de direction vers la droite (gauche).

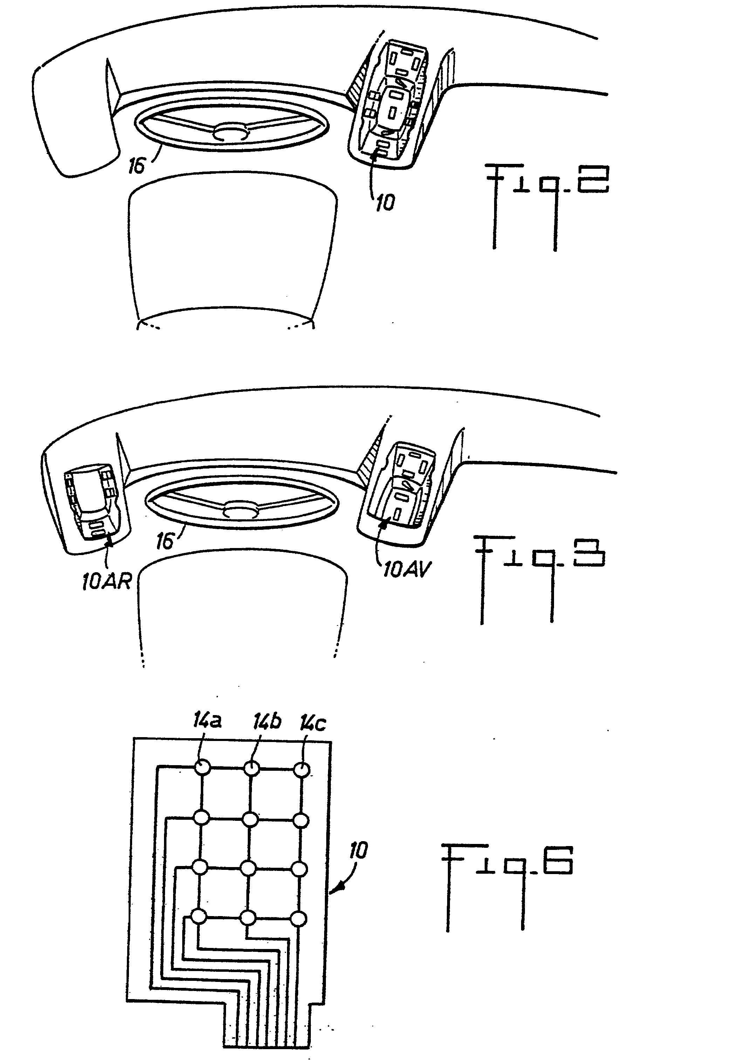

Selon l'exemple d'implantation à bord du véhicule réel illustré à la figure 2, le clavier 10 est installé à proximité du volant 16 du véhicule et à portée de main du conducteur installé en position de conduite normale. Le montage du clavier est assuré l'aide d'une console qui abrite les conducteurs électriques parvenant aux contacteurs ou provenant de ceux-ci.

Comme on le remarque, lorsque le conducteur désire actionner un des équipements de son véhicule, il lui suffit de poser la main - ici la main droite - sur le support, puis par simple reconnaissance tactile, d'atteindre le contacteur correspondant l'aide d'un doigt, et enfin d'actionner ce contacteur.

On conçoit que l'invention permet une conduite du véhicule en toute sécurité puisque le conducteur n'a pas besoin de quitter la route des yeux chaque fois qu'il désire actionner, ou arrêter, les divers équipements.

De plus, l'apprentissage de emplacement des contacteurs est pratiquement inexistant, ce qui représente un avantage important pour les conducteurs débutants, ou encore à chaque changement de véhicule.

On pourra également renforcer les éléments facilitant la reconnaissance tactile des contacteurs en apposant sur ceux-ci des reliefs choisis par convention, comme par exemple un triangle pour les feux de détresse.

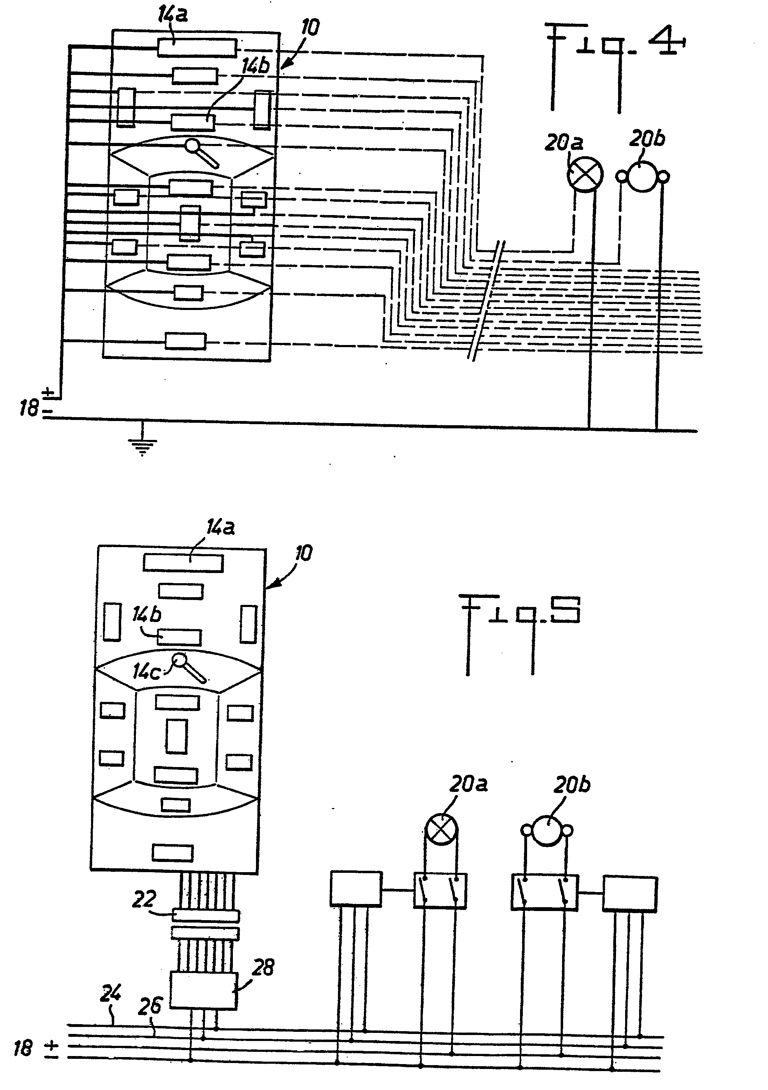

Selon la variante de la figure 3, le clavier est scindé en deux claviers partiels 10AV et 10AR placés à droite et à gauche du volant respectivement, de manière à répartir la commande des divers équipements entre les deux mains du conducteur. Avantageusement, le clavier partiel situé à droite comprend la moitié avant du véhicule, c'est-à-dire les contacteurs associés aux phares, aux feux de direction, à l'essuie-glace et lave-glace avant et l'avertisseur, et le clavier partiel situé à gauche comprend la moitié arrière du véhicule, c'est-à-dire les contacteurs associés aux lève-vitres, l'éclairage intérieur, l'essuie-glace et lave-glace arrière, au désembuage/dégivrage, aux feux de détresse et au feu de brouillard.

Lorsque les contacteurs sont de type mécanique, ils constituent leur propre témoin d'état, tant sur le plan visuel que sur le plan tactile. On pourra prévoir en complément d'associer aux contacteurs, tout au moins à certains d'entre eux, des témoins de fonctionnement lumineux ou sonores. Cette dernière disposition sera particulièrement avantageuse lorsque les contacteurs seront du type à effleurement.

Quel que soit le mode d'implantation envisagé à bord du véhicule c'est-à-dire un clavier unique ou plusieurs claviers partiels, on pourra prévoir que la console sur laquelle il est fixé soit escamotable afin de faciliter l'entrée ou la sortie du conducteur, ainsi que ses mouvements à l'arrêt du véhicule.

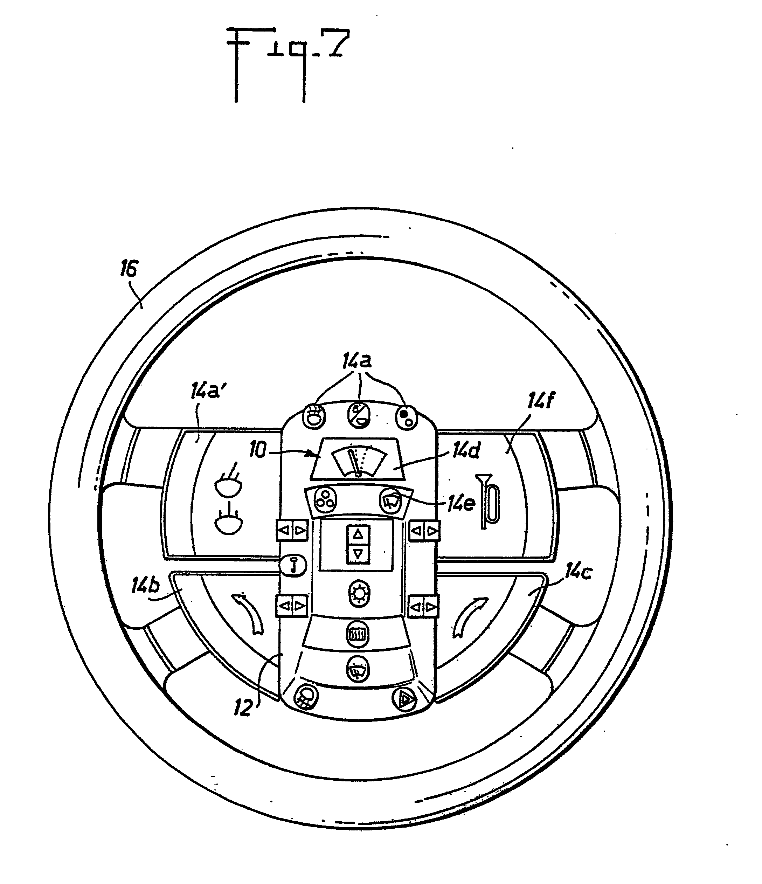

La figure 4 illustre un schéma de raccordement classique entre les contacteurs (14a, 14b, 14c, 14d...), la source d'énergie électrique 18 du véhicule et les équipements commandés (20a, 20b,...). Dans ce schéma, chaque commutateur est relié individuellement l'équipement qu'il commande. L'ensemble des câbles forme donc un faisceau ramifié depuis le dispositif jusqu'aux différents équipements.

Avantageusement, le clavier comporte un socle conformé en vue de sa fixation à l'emplacement du véhicule où il doit être implanté et une broche de raccordement électrique 22 est interposée entre les câbles électriques provenant des. divers contacteurs et le départ du faisceau. On peut éventuellement prévoir que la fixation du socle soit amovible et que la broche de raccordement soit débrochable.

Cette disposition procure de multiples avantages: En premier lieu, les claviers forment un tout, ensemble avec leur socle et leur broche électrique dont la fabrication n'interfère pas avec la réalisation du faisceau de raccordement et les opérations d'assemblage du véhicule et qui peut être testé séparément au moyen de bancs particulièrement simples un constructeur fabriquant différents modèles d'automobiles pourra utiliser le même clavier pour tous ses modèles, la différenciation des faisceaux électriques ne concernant que la partie du faisceau entre la broche de raccordement et les équipements ; En second lieu, le diagnostic et la réparation de pannes survenant dans le clavier peuvent être effectuées commodément en dehors du véhicule, le dépannage pouvant être fait par échange standard de l'ensemble du clavier et de ses câbles de liaison à la broche de raccordement, ceci concerne particulièrement la période où le véhicule est sous garantie ou les utilisateurs pressés ; Enfin, compte tenu des variantes d'équipements optionnels proposés par les constructeurs pour un même type de véhicule, il sera particulièrement aisé d'organiser l'approvisionnement du poste concerné de la chaîne de montage de véhicules avec des claviers comportant ou non les contacteurs correspondants à ces équipements optionnels.

Le schéma de câblage illustré à la figure 5 est particulièrement destiné aux installations en multiplexage. Si cette technique est adoptée aucun câble de distribution de puissance ne parvient aux contacteurs et le raccordement électrique du clavier se limite au raccordement du ou des bus de commande 24 et de contrôle 26, c'est-à-dire des câbles électriques de très faible section et en nombre très limité destinés à véhiculer des signaux numériques ou analogiques de très faible puissance. Avantageusement, le microprocesseur 28 associé à ce type d'installation sera intégré dans le support du clavier.

Les contacteurs pourront être raccordés individuellement au microprocesseur, ou encore être câblés suivant un réseau matriciel, comme illustré schématiquement à la figure 6, auquel cas le microprocesseur sera programmé de manière connue pour reconnaître l'état des divers contacteurs.

Enfin, on pourra prévoir d'intégrer au clavier selon l'invention un dispositif de neutralisation à code.

Pour éviter un enchevètrement de fils électriques à l'intérieur du support entre les contacteurs et le calculateur, on pourra réaliser ces fils électriques sous forme de pistes conductrices courant le long de la surface intérieure du support. Pour ce faire, une solution avantageuse consiste à réaliser le support tout d'abord sous la forme d'une carte plane de circuit imprimé puis de conférer cette carte la forme en relief souhaitée, par exemple par emboutissage ; le substrat de la carte sera réalisé en un matériau compatible avec le procédé de mise en forme choisi, et les pistes de circuit imprimé seront réalisées en un métal ductile leur permettant de suivre les déformations de la carte sans se déchirer. Les contacteurs sont ensuite fixés sur le support par tout procédé convenable et leurs terminaisons électriques sont raccordées aux pistes conductrices par soudure ou par contact serré.

Selon l'exemple d'implantation, illustré à la figure 7, le clavier est monté au centre du volant 16 du véhicule, ce qui permet une accessibilité extrêmement rapide à l'aide de l'une ou l'autre des deux mains indifféremment. Naturellement, le clavier est monté de façon à rester immobile par rapport au véhicule réel quelle que soit la position en rotation du volant, au moyen de tout dispositif convenable à cet effet.

Dans cette variante, on a prévu d'agencer certains contacteurs (14a', 14b, 14c, 14f) correspondant à des dispositifs d'urgence de manière à pouvoir être directement accessibles sans quitter le volant 16 des mains.

Comme illustré, ces contacteurs comportent des leviers d'actionnement qui s'étendent radialement depuis le clavier en direction du volant, de telle manière qu'ils puissent être actionnés à l'aide des doigts sans qu'il soit besoin de quitter le volant des mains.

Ce mode de réalisation présente l'avantage que la partie "électrique" ou "électronique" de ces contacteurs dits "d'urgence" est également portée par le clavier lui-même, ce qui évite d'avoir installer des raccordements électriques spécifiques à ces contacteurs.

A titre d'exemple non limitatif, ces contacteurs "d'urgence" pourront être :

celui qui commande l'avertisseur sonore 14f

ceux qui commandent les feux de direction 14b, 14c

celui qui commande la commutation entre feux de croisement et feux de route 14a', et permet d'effectuer des appels lumineux le jour.

Selon une dernière caractéristique, non représentée, les contacteurs, ou tout au moins certains d'entre eux, peuvent être implantés au fond de légères dépressions afin de ne pas faire saillie par rapport au support de clavier. De cette manière, on évite des actionnements intempestifs de contacteurs lors de heurts accidentels du clavier par une partie du corps autre que les doigts de la main (coudes, bras, etc..).

## Revendications

1. Dispositif de regroupement formant clavier (10) de contacteurs (14) de commande d'équipements (20) installés dans un véhicule, comprenant un support (12) consistant en une reproduction à échelle réduite d'un véhicule, et des contacteurs fixés sur le support à des emplacements correspondant sensiblement à ceux que les équipements qu'ils commandent occupent dans le véhicule, caractérisé en ce que ledit support consiste sensiblement au moins partiellement en une reproduction ou quasi reproduction en relief d'un véhicule, ledit support comprenant des reliefs et des surfaces suffisants pour permettre leur reconnaissance tactile.

2. Dispositif selon la revendication 1, caractérisé en ce que ledit support est sous forme de bas-relief.

3. Dispositif selon l'une ou l'autre des revendications 1 et 2, caractérisé en ce que ledit support (12) est scindé en deux supports partiels consistant chacun en une reproduction, ou quasi-reproduction, à échelle réduite de deux parties d'un véhicule.

4. Dispositif selon la revendication 3, caractérisé en ce que lesdits supports partiels sont des reproductions, ou quasi-reproductions, à échelle réduite des moitiés avant et arrière du véhicule (10AV, 10AR).

5. Dispositif selon l'une quelconque des revendications 1 à 4, caractérisé en ce que certains desdits contacteurs (14) forment également des reproductions, ou quasi-reproductions, à échelle réduite des équipements qu'ils commandent.

6. Dispositif selon l'une quelconque des revendications 1 à 5, caractérisé en ce que certains desdits contacteurs comportent des reliefs de reconnaissance tactile.

7. Dispositif selon l'une quelconque des revendications 1 à 6, caractérisé en ce que certains desdits contacteurs comportent des témoins de fonctionnement.

8. Dispositif selon l'une quelconque des revendications 1 à 7, caractérisé en ce que lesdits contacteurs sont reliés à un microprocesseur (28) formant interface vers un circuit de commande par multiplexage.

9. Dispositif selon l'une quelconque des revendications 1 à 8, caractérisé en ce que lesdits contacteurs sont câblés suivant un réseau matriciel.

10. Dispositif selon l'une quelconque des revendications 1 à 9, caractérisé en ce qu'il comporte un socle conformé en vue de sa fixation en un emplacement déterminé du véhicule et une broche (22) de raccordement électrique.

11. Dispositif selon l'une quelconque des revendications 1 à 10, caractérisé en ce qu'il est fixé sur une console escamotable.

12. Dispositif selon l'une quelconque des revendications 1 à 11, caractérisé en ce que ledit support est obtenu par déformation d'une carte de circuit imprimé comportant des pistes conductrices.

13. Dispositif selon l'une quelconque des revendications 1 à 12, caractérisé en ce qu'il est prévu pour être implanté au centre d'un volant (16) de véhicule.

14. Dispositif selon la revendication 13, caractérisé en ce que l'un desdits contacteurs au moins s'étend radialement depuis ledit support en direction dudit volant (16).

15. Dispositif selon l'une quelconque des revendications 1 à 14, caractérisé en ce que l'un desdits contacteurs au moins est disposé au fond d'une dépression prévue dans ledit support de manière à ne pas faire saillie par rapport à ce dernier.

## Patentansprüche

1. Umgruppierungsvorrichtung, welche eine Tastatur (10) von Schaltern (14) für die Betätigung von Ausrüstungen (20) aufweist, die in einem Fahrzeug angeordnet sind, mit einem Support (12) bestehend aus einer Reproduktion eines maßstabverkleinerten Fahrzeugs und an dem Support angebrachten Schaltern, die an Stellen angeordnet sind, die im wesentlichen jenen der Ausrüstungen in dem Fahrzeug entsprechen, die sie betätigen sind, dadurch gekennzeichnet, daß der Support im wesentlichen wenigstens teilweise aus einer Reproduktion oder einer Quasi-Reproduktion in Form eines Reliefs eines Fahrzeugs besteht, wobei der Support ausreichende Reliefs und Oberflächen aufweist, um deren Wiedererkennung durch Tasten zu erlauben.

2. Vorrichtung nach Anspruch 1, dadurch gekennzeichnet, daß der Support in Form eines schwachen Vorsprungbereiches (Bas-relief) ausgebildet ist.

3. Vorrichtung nach Anspruch 1 oder 2, dadurch gekennzeichnet, daß der Support (12) in zwei Teilsupports gespalten ist, welche jeweils aus einer maßstabverkleinerten Reproduktion oder Quasi-Reproduktion der beiden Teile eines Fahrzeugs bestehen.

4. Vorrichtung nach Anspruch 3, dadurch gekennzeichnet, daß die Teilsupports maßstabverkleinerte Reproduktionen oder Quasi-Reproduktionen der vorderen und hinteren Hälfte des Fahrzeugs (10AV, 10AR) sind.

5. Vorrichtung nach einem der Ansprüche 1 bis 4, dadurch gekennzeichnet, daß gewisse der Schalter (14) ebenfalls maßstabsverkleinerte Reproduktion oder Quasi-Reproduktionen der von ihnen betätigten Ausrüstungen sind.

6. Vorrichtung nach einem der Ansprüche 1 bis 5, dadurch gekennzeichnet, daß gewisse der Schalter Reliefs für die Wiedererkennung durch Tasten aufweisen.

7. Vorrichtung nach einem der Ansprüche 1 bis 6, dadurch gekennzeichnet, daß gewisse der Schalter Funktionsrückmelder aufweisen.

8. Vorrichtung nach einem der Ansprüche 1 bis 7, dadurch gekennzeichnet, daß die Schalter mit einem Mikroprozessor (28) verbunden sind, der eine Verbindung (Interface) zu einem Multiplex-Steuerschaltkreis bildet.

9. Vorrichtung nach einem der Ansprüche 1 bis 8, dadurch gekennzeichnet, daß die Schalter gemäß einem Hatrixnetz verbunden sind.

10. Vorrichtung nach einem der Ansprüche 1 bis 9, dadurch gekennzeichnet, daß sie einen Sockel aufweist, der für seine Festlegung in einer durch das Fahrzeug bestimmten Stelle ausgebildet ist, und einen Stecker (22) für eine elektrische Verbindung aufweist.

11. Vorrichtung nach einem der Ansprüche 1 bis 10, dadurch gekennzeichnet, daß sie auf einer einklappbaren oder versenkbaren Konsole angeordnet ist.

12. Vorrichtung nach einem der Ansprüche 1 bis 11, dadurch gekennzeichnet, daß der Support durch Verformung einer Karte mit intergriertem Schaltkreis erhalten wird, die Leiterbahnen aufweist.

13. Vorrichtung nach einem der Ansprüche 1 bis 12, dadurch gekennzeichnet, daß sie für den Einbau in der Mitte eines Lenkrads (16) des Fahrzeugs vorgesehen ist.

14. Vorrichtung nach Anspruch 13, dadurch gekennzeichnet, daß sie wenigstens einer der Schalter radial von dem Support aus in Richtung des Lenkrads (16) erstreckt.

15. Vorrichtung nach einem der Ansprüche 1 bis 14, dadurch gekennzeichnet, daß wenigstens einer der Schalter am Boden einer Vertiefung angeordnet ist, die in dem Support derart angeordnet ist, um gegenüber letzterem nicht hervorzustehen.

**Claims**

1. Grouping device constituting a keyboard (10) of keys (14) controlling equipments (20) mounted in a vehicle, comprising a support (12) consisting in a reduced-scale reproduction of a vehicle and keys mounted on the support in places substantially corresponding to the places which the equipment that they control in the vehicle, characterized in that said support substantially consists at least partly in a relief reproduction or near-reproduction of a vehicle, said support comprising raised portions and surfaces sufficiently defined to be identifiable by a touch of the finger.

2. Device according to claim 1, characterized in that said support is in low-relief form.

3. Device according to either claim 1 or claim 2, characterized in that said support (12) is divided into two partial supports each one being a reduced-scale three-dimensional reproduction or near-reproduction of two parts of a vehicle.

4. Device according to claim 3, characterized in that said partial supports are reduced-scale reproductions or near-reproductions, of the front and rear halves of the vehicle (10AV, 10AR).

5. Device according to any one of claims 1 to 4, characterized in that some of said keys (14) are also reduced-scale reproductions, or near-reproductions of the equipments that they control.

6. Device according to any one of claims 1 to 5, characterized in that some of said keys are provided with raised portions for tactile recognition.

7. Device according to any one of claims 1 to 6, characterized in that some of said keys are provided with indicators of operation.

8. Device according to any one of claims 1 to 7, characterized in that said keys are connected to a microprocessor (28) forming interface with a multiplex control circuit.

9. Device according to any one of claims 1 to 8, characterized in that said keys are wired according to a matrix system.

10. Device according to any one of claims 1 to 9, characterized in that said device comprises a base designed so as to be mounted in a predetermined part of the vehicle, and an electric connector pin.

11. Device according to any one of claims 1 to 10, characterized in that said device is fixed on a retractable bracket.

12. Device according to any one of claims 1 to 11, characterized in that said support is obtained by deformation of a printed circuit board comprising conductor tracks.

13. Device according to any one of claims 1 to 12, characterized in that said device is designed to be mounted in the center of a vehicle steering wheel (16).

14. Device according to claim 13, characterized in that at least one of said keys extends radially from said support towards said steering wheel (16).

15. Device according to any one of claims 1 to 14, characterized in that at least one of said keys is placed at the bottom of a recess provided in said support in order not to protrude with respect to the latter.

Fig. 1

Fig.2

Fig.3

Fig.6

Fig. 4

Fig. 5

# Fig.7